# EUROPÄISCHE PATENTANMELDUNG

(11) **EP 1 211 135 A2**
(43) Veröffentlichungstag der Anmeldung: **05.06.2002**
(21) Anmeldenummer: 01000651.8
(22) Anmeldetag: 22.11.2001
(51) Int. Cl.: B60R 11/02

(54) **Halterung für ein Mobilfunk-Endgerät**

(30) Priorität: 01.12.2000 DE 10059649
(71) Anmelder: SIEMENS AKTIENGESELLSCHAFT, 80333 München (DE)
(72) Erfinder: Köhler, Laszlo, D-81679 München (DE)

(57) **Zusammenfassung**

Die Erfindung betrifft eine Halterung für ein Mobilfunk-Endgerät, umfassend eine Aufnahmeeinheit und eine Trägereinheit. Lade- und Antennenkabel werden zusammen in eine der Einheiten zusammengeführt. Die Kabelenden sind direkt im Inneren der Einheit integriert, d. h. sie sind entweder dort verlötet, oder sie enden in einen Stecker, welcher dann gleichzeitig als Ladekontakt bzw. Antennenkontakt dient. Durch die Erfindung wird ein Steckerelement eingespart und auch dessen aufwendige Montage.

## Beschreibung

Die vorliegende Erfindung betrifft eine Halterung für ein Mobilfunk-Endgerät, welche eine Trägereinheit zur Befestigung der Halterung, eine Aufnahmeeinheit zum Aufnehmen des Mobilfunk-Endgeräts, ein erstes Kabel zur Verbindung des Mobilfunk-Endgeräts mit einer externen Energiespeichereinheit und ein zweites Kabel zur Verbindung des Mobilfunk-Endgeräts mit einer externen Antenne umfaßt.

Derartige Halterungen sind aus dem Stand der Technik bekannt. Es ist Zweck einer Halterung, das Mobilfunk-Endgerät zu halten, beispielsweise wenn der Benutzer Auto fährt, andererseits sollte das Mobilfunk-Endgerät während dieser Zeit geladen werden. Zudem ist ein Anschluß an eine externe Antenne wünschenswert, um einen besseren Empfang zu gewährleisten.

Die Aufnahmeeinheit zum Aufnehmen des Mobilfunk-Endgeräts ist beweglich an der Trägereinheit befestigt, um das Mobilfunk-Endgerät möglichst einfach in die Trägereinheit stecken zu können. Die Aufnahmeeinheit kann köcherartig ausgebildet sein.
Normalerweise befindet sich im Boden des Köchers ein Durchbruch, welcher den Ladestecker zum Anschluß des Mobilfunk-Endgeräts an eine externe Energiespeichereinheit freigibt.
Ebenso umfaßt die Halterung einen Anschluß oder Steckkontakt für eine externe Antenne.
Dem Mobilfunk-Endgerät zugeordnete Steckkontakte dienen also dazu, den Kontakt zwischen dem Lade- bzw. Antennenanschluß am Mobilfunkendgerät und dem entsprechenden Anschluß an der Halterung zu Antenne bzw. Energiespeichereinheit herzustellen. Die Lage dieser Steckkontakte an der Halterung wird durch die Anschlüsse am Mobilfunk-Endgerät festgelegt.
Mittels weiterer, der Halterung zugeordneter Steckkontakte wird über Kabel Kontakt zwischen dem entsprechenden Anschluss an der Halterung und dem externen Gerät, Energiespeichereinheit oder externe Antenne, hergestellt.
Jede der beiden Verbindungen, Antennen- und Ladeverbindung, benötigen also zwei Steckkontakte zwischen Mobilfunk-Endgerät und dem externen Gerät.

Die Kabel, mittels derer diese Verbindungen hergestellt werden, enden üblicherweise in einem Steckerelement, welches z. B. durch Verschweißen mit der Halterung in einen dauerhaften Kontakt mit der Halterung gebracht wird.

Massenprodukte wie Mobilfunk-Endgeräte sollten ebenso wie ihr Zubehör erschwinglich sein. Kostentreiber bei der Zubehörherstellung für Mobilfunk-Endgeräte sind im allgemeinen die Kunststoffpreise. Dies führt beispielsweise bei der Herstellung einer eingangs geschilderten Halterung zu folgender Situation: Ein erstes Kabel, welches zur Herstellung des Kontaktes zwischen Halterung und einer externen Energiespeichereinheit dient, wird von einem Hersteller A produziert. Ein zweites Kabel, welches zur Herstellung des Kontaktes zwischen der Halterung und einer externen Antenne dient, wird von einem weiteren Hersteller B produziert. Die Steckerelemente zur Herstellung des der Halterung zugeordneten Kontaktes zwischen den Kabeln und der Halterung werden nun jeweils wieder von einem anderen Hersteller produziert. Die Endmontage, also das Zusammensetzen aller Bestandteile zur fertigen Halterung, findet dann wiederum bei einem anderen Hersteller statt.

Entscheidungskriterien für die einzelnen Hersteller sind, wie oben erläutert, die von ihnen geforderten Preise. Es ist offensichtlich, daß eine derartige Produktion einer Halterung, mit vielen Einzelteilen, die von unterschiedlichen Herstellern bezogen werden müssen, einen hohen zeitlichen Aufwand erfordert. Da sich im weiteren die Hersteller nicht zwangsweise am selben Ort befinden, treten zudem logistische Probleme auf, beispielsweise wenn sich ein Hersteller in Irland, der andere jedoch in Polen befindet. Zusätzlich findet die Gesamtmontage bei verschiedenen Herstellern statt: Zum einen muß das Steckerelement an das Kabel montiert werden, zum anderen muß ein Kontakt zwischen Steckerelement des Kabels und der Halterung hergestellt werden.

Bei der Endmontage müssen die Kunststoffe, z. B. Stecker und Gehäuse der Halterung, miteinander verschweißt werden, um einen dauerhaften Kontakt zu gewährleisten. Dies stellt einen weiteren Arbeitsschritt dar mit dem entsprechenden Aufwand an Zeit und Kosten.

Daher liegt der vorliegenden Erfindung die Aufgabe zugrunde, eine Halterung anzugeben, welche gegenüber dem Stand der Technik mit weniger Aufwand herstellbar ist.

Diese Aufgabe wird erfindungsgemäß durch eine Halterung mit den Merkmalen des Anspruchs 1 gelöst. Weiterbildungen der Erfindung ergeben sich aus den abhängigen Ansprüchen.

Die erfindungsgemäße Halterung für ein Mobilfunk-Endgerät umfaßt eine Einheit zum Aufnehmen des Mobilfunk-Endgeräts, die an einer Trägereinheit beispielsweise kippbar beweglich befestigt ist. Ein erstes Kabel, beispielsweise das Ladekabel, und ein zweites Kabel, beispielsweise das Antennenkabel, werden zusammen in eine dieser Einheiten, Aufnahmeeinheit oder Trägereinheit, geführt. In dieser Einheit werden sie dann zu ihrem jeweiligen Bestimmungsort geführt.

Vorteilig daran ist, daß ein Steckkontakt auf jedem Verbindungsweg, nämlich der Steckkontakt, welcher der Halterung zugeordnet ist und sich zwischen Kabel und Halterung befindet, eingespart wird und auch der damit verbundene Arbeitsschritt des Verschweissens der Kunststoffteile. Dies führt zu einer gegenüber dem Stand der Technik mit zwei Steckkontakten pro Verbindungsweg einfacheren Herstellung und zu einem günstigeren Preis, da ein Hersteller weniger zur Zulieferung der Einzelteile benötigt wird und auch beispielsweise das Verschweißen von Stecker und dem Gehäuse der Halterung eingespart wird. Da die Kabel durch eine gemeinsame Öffnung in einer der beiden Einheiten geführt werden, ist nicht für jedes Kabel eine separate Öffnung nötig. Die einzelnen Leitungen eines Kabels können beispielsweise im Inneren der Einheit direkt verlötet werden.

Es können auch mehr als zwei Kabel zur Verbindung mit externen Geräten verwendet werden. Ebenso können durch Lade- und Antennenkabel neben ihren originären Funktionen auch weitere Funktionen wahrgenommen werden. Beispielsweise können mittels des Ladekabels auch Signale, welche im Zusammenhang mit der Freisprechfunktion auftreten, übertragen werden.

Eine Weiterbildung der Erfindung sieht vor, daß erstes und zweites Kabel an Aufnahmeeinheit oder/und Trägereinheit zusammengeführt sind. Dieses Zusammenführen geschieht mittels eines Fixierungselements, beispielsweise einer Kabeltülle. Diese Kabeltülle kann mehrteilig gefertigt sein. Jeder Kabelhersteller kann dann sein Kabel bereits montiert mit einem Teil der Tülle liefern. Bei der Endmontage, das ist die Montage bei der die gesamte Halterung zusammengesetzt wird, werden auch die Teile der Tüllen miteinander verbunden. Die Tülle selbst dient zur Zugentlastung, d. h. es wäre mit Nachteilen verbunden, auf sie zu verzichten. Vorteilig an dieser Weiterbildung ist ebenfalls eine Reduzierung der Anzahl der Hersteller sowie eine vereinfachte Montage.

Eine weitere Ausführungsvariante der Erfindung sieht vor, daß das Ende eines Kabels durch einen Stecker gebildet wird, mittels dem direkt der Kontakt zum Mobilfunk-Endgerät herstellbar ist. Beispielsweise ist das Ende des Ladekabels durch einen Stecker gebildet, der komplementär zur Ladebuchse des Mobilfunk-Endgeräts ist. Auf dem gesamten Weg zwischen Mobilfunk-Endgerät und Kabel befindet sich also wie bei den vorhergehenden Ausführungsvarianten ein Stecker. Vorteil ist auch hier eine Vereinfachung der Montage durch eine Reduktion der Anzahl der Arbeitsschritte.

Eine andere Weiterbildung der Erfindung besteht darin, daß erstes und zweites Kabel in die Aufnahmeeinheit eingeführt werden und eines der Kabel, z. B. das Antennenkabel, zu der Trägereinheit geführt ist. Normalerweise besitzen Mobilfunk-Endgeräte einen Anschluß für die externe Antenne im oberen Bereich. Bei einer vorteilhaften Ausführung der Halterung sind Aufnahmeeinheit und Trägereinheit gegeneinander verschoben. Das heißt beispielsweise für den Fall, daß die Halterung an einer senkrechten Wand aufgehängt ist, daß sich das untere Ende der Aufnahmeeinheit tiefer als das untere Ende der Trägereinheit befindet. Aus Gründen der räumlichen Zugänglichkeit ist es günstig, die Kabel an einer exponierten Stelle mit der Halterung zu verbinden. Eine Anbringung der Kabel von unten hat insbesondere den Vorteil, daß die Kabel frei hängen können und im Normalfall am wenigsten stören.

Bei oben geschilderter Ausführung der Halterung ist also das Antennenkabel von der Aufnahmeeinheit zur Trägereinheit geführt. Wichtig ist hierbei, daß die Aufnahmeeinheit gegenüber der Trägereinheit beweglich bleibt und daß bei Bewegung der Aufnahmeeinheit die Kabelverbindungen in der Halterung nicht reißen. Beide Kabel sind deshalb in der Halterung so angeordnet, daß genügend Spiel für die notwendigen Bewegungen zur Verfügung steht.
Eine notwendige Bewegung kann beispielsweise das Verkippen der Aufnahmeeinheit nach vorne sein, um das Mobilfunk-Endgerät hineinzustecken, ebenso wie das anschließende Kippen der Aufnahmeeinheit, um einen Kontakt zwischen Mobilfunk-Endgerät und Antennenanschluß herbeizuführen. Vorteilig an der hier vorgeschlagenen Ausführungsvariante ist jedoch folgendes: Im Normalfall besitzt das Ladekabel mehrere Leitungen und ist daher inflexibler als das Antennenkabel. Daher ist für den Fall, daß das Ladekabel bewegt wird mit mehr Zugkräften zu rechnen, als für eine Bewegung des Antennenkabels. Mittels dieser Zugkräfte könnten elektrische Kontakte beschädigt werden.

Ebenso können auch beide Kabel in die Trägereinheit eingeführt werden und von dort aus verteilt werden.

Eine andere Weiterbildung der Erfindung kann darin bestehen, daß die Aufnahmeeinheit um zumindest eine Achse drehbar ist. Vorteilhafterweise ist die Aufnahmeeinheit derart schwenkbar gelagert, daß ein möglichst einfaches Einführen des Mobilfunk-Endgerätes gewährleistet ist. Hierbei ist eine Bewegung um mehrere Achsen mit eingeschlossen. Der Begriff Bewegung umfaßt hier beispielsweise Kipp- oder/und Drehvorgänge und auch Bewegungen um mehrere Achsen.

Eine andere Weiterbildung sieht vor, daß das Fixierungselement zum Zusammenführen der Kabel separate Bereiche für die einzelnen Kabel aufweist. Dies ist insbesondere vorteilhaft, wenn jeder Hersteller sein Kabel mit dem entsprechenden Teil des Fixierungselements liefert und diese Teile dann zusammensetzbar sind.

Weiterhin können die Bereiche für Antennen- und Ladekabel beispielsweise unterschiedliche Schirmungen aufweisen, um sich nicht gegenseitig zu beeinflussen, wenn beispielsweise durch Lade- oder/und Antennenkabel zusätzliche Funktionen wahrgenommen werden. Dadurch kann beispielsweise die Qualität des Empfangs oder der Sprache bei Freisprecheinrichtungen erhöht werden.

Eine Weiterbildung der Erfindung sieht vor, daß Aufnahmeeinheit und Trägereinheit mehrteilig gebildet sind. Eine mehrteilige Konstruktion dieser Einheiten ist von Vorteil, wenn eine optimale Anpassung der Halterung an die Umgebung, z. B. das Armaturenbrett eines Wagens, erreicht werden soll. Ein modularer Aufbau ist desweiteren von Vorteil für den Herstellungsprozeß, da unter Umständen einzelne Teile für mehrere Produkte verwendet werden können. Im Unterschied zu der Kabelherstellung werden die einzelnen Teile von Aufnahme- und Trägereinheit im Normalfall von einem Hersteller geliefert. Eine höhere Stückzahl und eine geringere Anzahl von Einzelteilen reduzieren in diesem Fall die Produktionskosten.

Eine weitere Ausführungsvariante besteht darin, daß beide Kabel in jeweils direkt dem Mobilfunk-Endgerät zugeordneten Steckkontakt münden. Der Steckkontakt für das Ladekabel befindet sich dabei vorteilhafter Weise im unteren Bereich der Aufnahmeeinheit, beispielsweise dem Köcherboden, der Steckkontakt für das Antennenkabel am oberen Ende der Trägereinheit. Vorteilig an dieser Ausführungsvariante ist ebenfalls eine einfache Herstellung und Montage.

Eine andere Weiterbildung der Erfindung sieht vor, daß die Achse, um welche die Aufnahmeeinheit beweglich ist, im Wesentlichen mit einer Parallelen zu einer Wand zusammenfällt, an welcher die Halterung befestigt wird. Dies erleichtert insbesondere das Einführen des Mobilfunk-Endgeräts in die Halterung, wenn die Halterung an einer Ebene befestigt ist, welche im Wesentlichen senkrecht ist.

Als Beispiel läßt sich das Armaturenbrett eines Kraftfahrzeugs anführen oder auch einfach die Wand eines Zimmers.

Eine andere Weiterbildung sieht vor, daß es sich bei der Halterung um eine Fahrzeughalterung handelt. In Fahrzeugen ist es aufgrund der Sicherheitsbestimmungen erforderlich, daß das Mobilfunk-Endgerät eine Freisprecheinrichtung beinhaltet. Diese Freisprechfunktion wird im allgemeinen über die Halterung realisiert. Zudem will man das Mobilfunk-Endgerät während des Autofahrens laden. Beim Telefonieren wird ein guter Empfang gewünscht. Der Empfang kann z. B. über eine externe Antenne verbessert werden. Aus den eben genannten Gründen ist es offensichtlich, daß es sich bei einer Fahrzeughalterung um ein Massenprodukt handelt. Daher ist hierbei eine Vereinfachung des Herstellungsprozesses für den Produzenten von Vorteil.

Im folgenden wird die Erfindung anhand eines Ausführungsbeispiels erklärt, welches mittels folgender Figuren näher erläutert wird:
- Figur 1: eine Gesamtansicht einer Ausführungsvariante der Halterung,
- Figur 2: eine Detailansicht einer Aufnahmeeinheit,
- Figur 3: eine Innenansicht einer Aufnahmeeinheit,
- Figur 4: eine Explosionsdarstellung eines Fixierungselements,
- Figur 5: eine rückwärtige Ansicht eines Halterung,
- Figur 6: eine Explosionsdarstellung einer Halterung und
- Figur 7: den schematischen Aufbau einer Halterung in einer Seitenansicht.

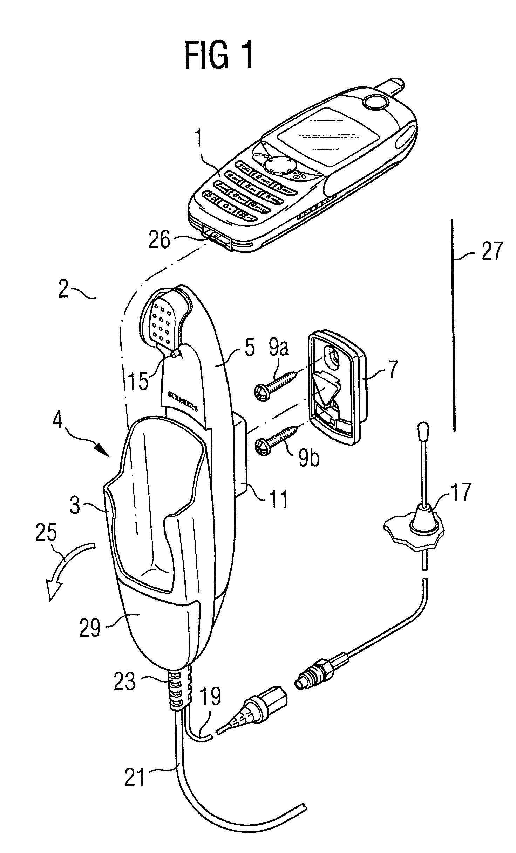

In Figur 1 wird das Mobilfunk-Endgerät 1 längs der strichgepunkteten Linie 2 in die Aufnahmeeinheit 3 der Halterung 4 geführt. Die Aufnahmeeinheit 3 ist kippbar an der Trägereinheit 5 befestigt. Zum Befestigen der Halterung 4 an beispielsweise einem Kfz-Armaturenbrett kann eine Halteplatte 7 dienen. Die Befestigung der Halteplatte 7 kann mittels Schrauben 9a und 9b erfolgen. Die Befestigung der Halterung 4 an der Halteplatte 7 erfolgt durch einen Einrastmechanismus zwischen einem an der Trägereinheit befestigtem Konstruktionselement 11 und der Halterplatte 7. Die Trägereinheit 5, welche auch mehrteilig gefertigt sein kann, kann beispielsweise auch einen Lautsprecher für die integrierte Freisprechanlage umfassen. Mittels des Steckelements 15 kann ein Kontakt zwischen Mobilfunk-Endgerät und einer externen Antenne hergestellt werden. Ein Antennenkabel 19 führt zu dieser externen Antenne. Dieses Kabel 19 läuft von Steckerelement 15 durch die Trägereinheiten in die Aufnahmeeinheit 3, die es gemeinsam mit dem Ladekabel 21 verläßt. Diese beiden Kabel können neben den eben genannten Funktionen, nämlich der Herstellung eines Kontaktes zu externer Antenne bzw. einer Energiespeichereinheit, welche beispielsweise durch eine Kfz-Batterie gebildet sein kann, noch weitere Funktionen wahrnehmen. Am unteren Ende der Aufnahmeeinheit 3 sind beide Kabel mit einem Fixierungselement 23 zusammengeführt. Dieses Fixierungselement kann eine Kabeltülle sein. Das Ladekabel 21 mündet in einen Stecker in der Aufnahmeeinheit 3, mittels welchem ein Kontakt mit der Ladebuchse 26 des Mobilfunk-Endgeräts 1 hergestellt wird.

Im nicht beladenen Zustand befindet sich die Aufnahmeeinheit gegenüber der Trägereinheit in einem verkippten Zustand, der ein Einführen des Mobilfunk-Endgeräts in die Aufnahmeeinheit vereinfacht.

Die Aufnahmeeinheit 3 kann sich gegenüber der Trägereinheit 5 entlang der Richtung bewegen, die durch Pfeil 25 gekennzeichnet ist, d. h. es ist bewegbar um eine Achse, die im wesentlichen parallel zu der Wand 27 ist, an welcher die Halterung befestigt wird. Diese Wand kann ein Armaturenbrett sein.

Es ist darauf hinzuweisen, daß der Vorteil an einer Halterung gemäß Figur 1 die Anbindung der Kabel 19 und 21 ist. Wie eingangs im Stand der Technik geschildert, werden das Ladekabel 21 und das Antennenkabel 19 und die jeweils passenden Stecker von den unterschiedlichen Herstellern geliefert. Der Entscheidungsgrund Für oder Wider einen Hersteller war der jeweilige Preis, was dazu führen konnte, das die einzelnen Teile quer durch Europa verschickt wurden. Zwischen den fertigen Kabeln wird mit einer entsprechenden Buchse an der Aufnahmeeinheit 3 oder der Trägereinheit 5 ein Kontakt hergestellt. Damit der Kontakt dauerhaft ist, werden die Stecker der Kabel 21 und 19 mit der Aufnahmeeinheit bei der Endmontage verschweißt. Im Unterschied dazu ist bei der Erfindung der Kontakt, welcher der Halterung zugeordnet ist, nicht mehr erforderlich.

Bei einer Ausführungsvariante der Halterung fällt eine Vielzahl von Herstellungsschritten weg: Die Kabel 21 und 19 können von den Herstellern mit einem entsprechenden Teil der Kabeltülle 23 geliefert werden. Diese Teile sind derartig ausgeformt, daß sie sich zur Kabeltülle 23 zusammensetzen lassen. Beide Kabel weisen keinen Stecker auf, sondern werden direkt in die Aufnahmeeinheit eingeführt. Um eine einfache Montage der Kabel 21 und 19 in der Aufnahmeeinheit 3 zu gewährleisten, ist diese mehrteilig ausgefertigt und besitzt insbesondere einen Deckel 29.

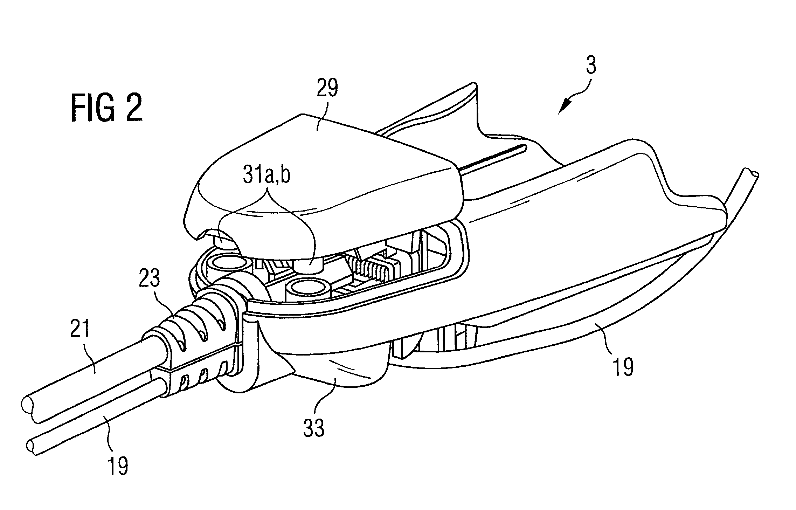

Figur 2 zeigt die Aufnahmeeinheit 3 mit dem abnehmbaren Deckel 29, dem Fixierungselement 23, dem Ladekabel 21 und dem Antennenkabel 19. Das Fixierungselement 23 ist zweiteilig ausgefertigt. Das Antennenkabel 19 wird gemeinsam mit dem Ladekabel 21 in die Aufnahmeeinheit 3 eingeführt und anschließend rückseitig aus der Aufnahmeeinheit 3 geführt.
Das Antennenkabel ist dabei so angeordnet, daß es genügend Spiel für die Bewegung der Aufnahmeeinheit 3 gegenüber der Trägereinheit 5 läßt. Wie bereits erläutert, werden beide Kabel 21 und 19 durch eine gemeinsame Öffnung in der Aufnahmeeinheit 3 in diese eingeführt. Die Größe dieser Öffnung ist den Dimensionen des Fixierungselements 23 angepaßt. Durch entsprechendes Einsetzen des Fixierungselements 23 kann so eine Zugentlastung für die beiden Kabel 21 und 19 gewährleistet werden. Die Befestigung des Deckels 29 an der Aufnahmeeinheit 3 erfolgt über Dome 31a und b, mittels derer ein Steckkontakt hergestellt wird, der zusätzlich geklebt wird. Die Führung des Antennenkabels 19 zur Trägereinheit 5 erfolgt über die Schiene 33.

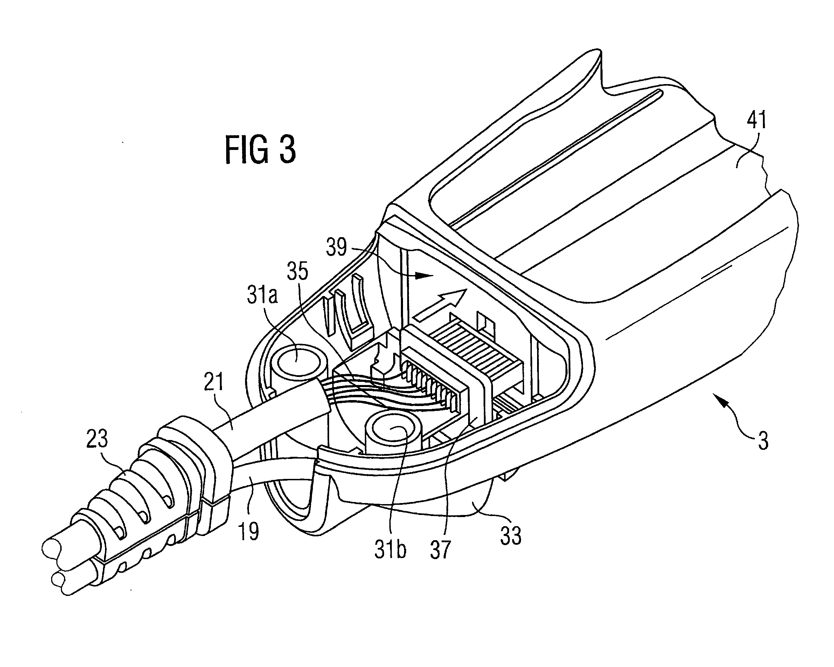

Figur 3 zeigt nun eine Detailansicht der Aufnahmeeinheit 3 ohne den Deckel 29. Das Fixierungselement 23 ist zur besseren Übersicht noch nicht in die Aufnahmeeinheit 3 eingesetzt. Die Dome 31a und b sind beiderseits der Kabel angeordnet. Die einzelnen Leitungen 35 des Ladekabels 21 sind mit einem Ladestecker 37 verbunden. Dieser Ladestecker 37 ist direkt komplementär zur Ladebuchse 26 des Mobilfunk-Endgeräts 1.
Auf der gesamtem Verbindung zwischen Energiespeichereinheitund Ladebuchse befindet sich also nur ein Steckkontakt.
Der Ladestecker 37 wird durch den Boden 39 des Aufnahmebereichs 41 für das Mobilfunk-Endgerät 1 gesteckt. Die einzelnen Leitungen 35 des Ladekabels 21 sind dabei derartig geführt, daß genügend Spiel für eine Bewegung möglich ist. Das Antennenkabel 19 wird ebenfalls zusammen mit dem Ladekabel 21 in die Aufnahmeeinheit 3 eingeführt, verläßt jedoch rückwärtig über die Schiene 33 die Aufnahmeeinheit 3.

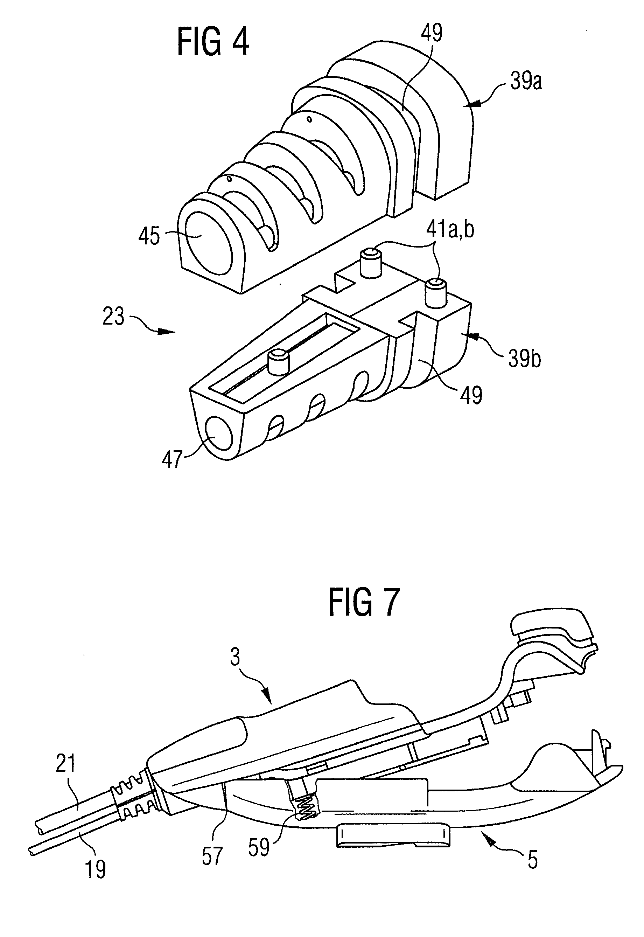

Figur 4 zeigt eine Detailansicht des Fixierungselements 23. Die Teile 39a und b sind über Zentrierdome 41a und b und die Klebefläche 43 zusammensetzbar. Die Öffnungen 45 bzw. 47 dienen zum Durchführen des Ladekabels 21 bzw. des Antennenkabels 19. Die Kabel 21 und 19 werden mit den zugehörigen Teilen des Fixierungselements 39a und 39b vom jeweiligen Hersteller geliefert. Die Nut 49 dient zum Fixieren des Fixierungselements 23 in der Aufnahmeeinheit 3, wodurch eine Zugentlastung für die Kabel 19 und 21 gewährleistet werden kann.

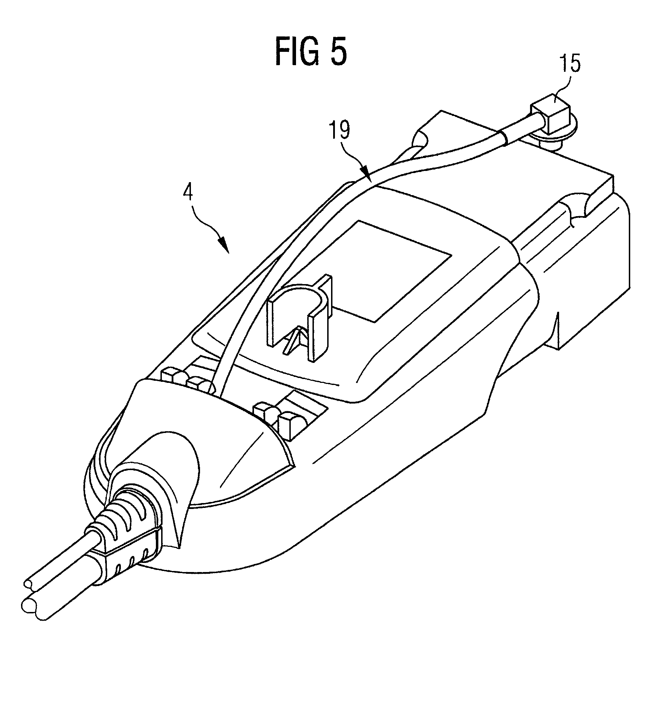

Figur 5 zeigt die rückwärtige Ansicht der Halterung 4. Das Antennenkabel 19 wird lose zum Steckerelement 15 das zum Anschluß an eine externe Antenne dient, geführt, so daß eine ungehinderte Bewegung der Aufnahmeeinheit 3 gegenüber der Trägereinheit 5 gewährleistet ist.

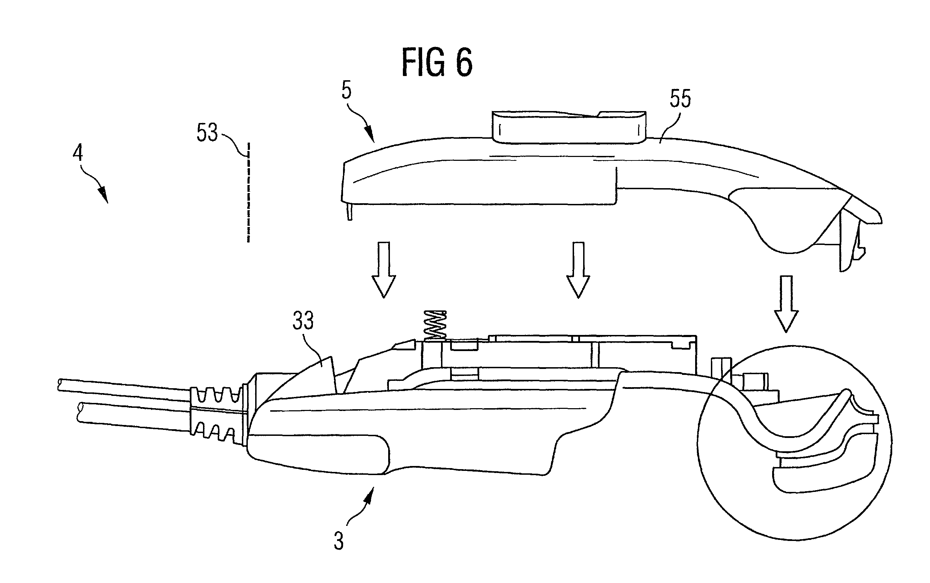

Figur 6 zeigt die Seitenansicht einer vorteiligen Ausführung der Halterung 4. Die Halterung 4 besteht aus einer Trägereinheit 5, einer Aufnahmeeinheit 3 und aus einem Oberteil 49, das den Antennenbereich 51 miteinschließt.

In dieser beispielhaften Ausführung werden Trägereinheit und Aufnahmeeinheit nur im mittleren Bereich miteinander verbunden. Sie schließen nicht am gleichen Ort 53 ab. Daraus ergibt sich die vorteilige Anordnung, daß die Kabel 19 und 21 zunächst beide in die Aufnahmeeinheit eingeführt werden.

Bei anderer geometrischer Anordnung oder unterschiedlicher Form der Einheiten können die Kabel zunächst z. B. in die Trägereinheit eingeführt werden. Es ist wünschenswert, daß beide die Bewegungsfreiheit zwischen Trägereinheit 5 und Aufnahmeeinheit 3 erhalten bleibt.

In der beispielhaften Ausführung verläuft das Antennenkabel 19 entlang der Oberseite 55 der Trägereinheit 5.

Figur 7 zeigt schematisch, wie Aufnahmeeinheit 3 und Trägereinheit 5 zusammengesetzt sind. Die Kabel 19 und 21 werden in die Aufnahmeeinheit 3 geführt. Aufnahmeeinheit 3 und Trägereinheit 5 sind gegeneinander mittels eines Scharniers 57 bewegbar. Im nicht beladenen Zustand der Halterung weist die Aufnahmeeinheit 3 in die dargestellte Richtung. Diese Richtung wird mittels der Rückstellkraft einer Feder 59 erzielt. Im beladenen Zustand wird diese Feder vom Benutzer zusammengedrückt. Im zusammengedrückten Zustand der Feder kann dann ein Kontakt zwischen dem externen Antennenanschluß des Mobilfunk-Endgeräts und der dafür vorgesehenen komplementären Einheit an der Halterung hergestellt werden.

### Bezugszeichenliste

- 1: Mobilfunk-Endgerät
- 2: strichgepunktete Linie
- 3: Aufnahmeeinheit
- 4: Halterung
- 5: Trägereinheit
- 7: Halteplatte
- 9a, b: Schrauben
- 11: Konstruktionselement
- 15: Steckerelement
- 17: externe Antenne
- 19: Antennenkabel
- 21: Ladekabel
- 23: Fixierungselement
- 25: Richtung
- 26: Ladebuchse
- 27: Wand
- 29: Decken
- 31a, b: Dome
- 33: Schiene
- 35: Leitungen
- 37: Ladestecker
- 39a, b: Teile
- 41a, b: Zentrierdome
- 43: Klebefläche
- 45: Öffnung
- 47: Öffnung
- 49: Oberteil
- 51: Antennenbereich
- 53: Ort
- 55: Oberseite
- 57: Scharnier

## Patentansprüche

1. Halterung (4) für ein Mobilfunk-Endgerät (1)
- mit einer Trägereinheit (5),
- mit einer Aufnahmeeinheit (3) zum Aufnehmen des Mobilfunk-Endgeräts (1), die beweglich gelagert an der Trägereinheit (5) befestigt ist,
- mit einem ersten Kabel (21) zur Verbindung des Mobilfunk-Endgeräts (1) mit einer externen Energiespeichereinheit und
- mit einem zweiten Kabel (19) zur Verbindung des Mobilfunkendgeräts (1) mit einer externen Antenne,
**dadurch gekennzeichnet , daß** das erste und das zweite Kabel in eine der Einheiten, Trägereinheit (5) oder Aufnahmeeinheit (3), geführt sind.

2. Halterung (4) nach Anspruch 1, bei der das erste (21) und das zweite Kabel (19) an einer der Einheiten, Trägereinheit (5) oder Aufnahmeeinheit (3), mittels eines Fixierungselements (23) zusammengeführt sind.

3. Halterung (4) nach einem der vorhergehenden Ansprüche, bei der das Ende von zumindest einem Kabel (19,21) durch einen Stecker gebildet ist, und dieser Stecker unmittelbar in einer der Einheiten, Trägereinheit (5) oder Aufnahmeeinheit (3), integriert ist.

4. Halterung (4) nach einem der vorhergehenden Ansprüche, bei der erstes (21) und zweites Kabel (19) in die Aufnahmeeinheit (3) eingeführt sind und eines der Kabel (19,21) von der Aufnahmeeinheit (3) zu der Trägereinheit (5) geführt ist.

5. Halterung (4) nach einem der vorhergehenden Ansprüche, bei der die Aufnahmeeinheit (3) um zumindest eine Achse schwenkbar gelagert ist.

6. Halterung (4) nach einem der vorhergehenden Ansprüche 2 - 5, bei der das Fixierungselement (23) separate Bereiche für einzelne Kabel aufweist.

7. Halterung (4) nach Anspruch 6, bei der die separaten Bereiche für die Kabel im Fixierungselement (23) unterschiedlich ausgearbeitet sind und an die Art der über das Kabel übertragenen Signale angepaßt sind.

8. Halterung (4) nach einem der vorhergehenden Ansprüche, bei der Aufnahmeeinheit (3) und Trägereinheit (5) mehrteilig gebildet sind.

9. Halterung (4) nach einem der vorhergehenden Ansprüche, bei der das erste Kabel (21) in einen ersten Steckkontakt am unteren Ende der Aufnahmeeinheit (3) mündet und das zweite Kabel (19) in einen zweiten Steckkontakt am oberen Ende der Trägereinheit (5) mündet.

10. Halterung (4) nach einem der vorhergehenden Ansprüche, bei der die Achse, um welche die Aufnahmeeinheit (3) beweglich ist, im Wesentlichen parallel zu einer Ebene ist, an welcher die Halterung (4) befestigt ist.

11. Kraftfahrzeug-Einbauvorrichtung mit einer Halterung (4) nach einem der vorhergehenden Ansprüche.
